# DEMANDE DE BREVET EUROPEEN

(11) **EP 2 209 068 A1**
(43) Date de publication de la demande: **21.07.2010**
(21) Numéro de dépôt: 10000217.9
(22) Date de dépôt: 12.01.2010
(51) Int. Cl.: G06F 11/34, H04W 8/24

(54) **Procédé d'audit de données d'une application informatique d'un terminal**

(30) Priorité: 15.01.2009 FR 0900172; 15.01.2009 US 354175
(71) Demandeur: Miyowa, F-13002 Marseille (FR)
(72) Inventeur: Colon, François, 13013 Marseille (FR)
(74) Mandataire: Bentz, Jean-Paul

(57) **Abrégé**

L'invention concerne un procédé d'audit de données relatives à l'usage d'une application informatique exécutée dans un terminal (T) comportant les étapes suivantes :
- exécution de l'application à partir d'un ensemble de fonctions utilisant des composants d'un cadriciel ;
- audition des composants du cadriciel, et
- transmission des résultats (Rslt) obtenus de ladite étape d'audition à un serveur (S) distant.

Le procédé comporte les étapes préliminaires suivantes :
- labellisation préalable de chaque composant du cadriciel ;
- transmission au terminal d'une liste (L) de composants du cadriciel devant être audités, et
- intégration d'une instruction d'audit dans au moins un composant du cadriciel.

De plus, ladite étape d'audition comprend une sous-étape d'activation de l'instruction d'audit (Adt) lorsque le composant du cadriciel dans lequel ladite instruction est intégrée, le composant utilisé étant compris dans ladite liste, de sorte à obtenir lesdits résultats comprenant les labels des composants audités associés à l'utilisation qui en est faite.

## Description

L'invention se rapporte à un procédé d'audit de données d'une application informatique d'un terminal.

### DOMAINE TECHNIQUE DE L'INVENTION

La présente invention se rapporte au domaine des procédés permettant de récupérer des données d'usage d'une application informatique embarquée dans un terminal, en vue d'analyser l'activité des utilisateurs de ladite application et/ou d'analyser des dysfonctionnements qui peuvent se produire lors de la mise en oeuvre de ladite application informatique.

### ETAT DE LA TECHNIQUE ANTERIEURE

Habituellement, l'analyse de données d'usage d'une application consiste à auditer des informations relatives à ces données à partir de procédures mise en oeuvre par des développeurs consistant à préalablement écrire des instructions d'audit au sein de ladite application afin de collecter des informations d'usage. Ces dernières sont ensuite analysées, en temps réel ou a posteriori, par d'autres systèmes informatiques afin de présenter des résultats sous forme de données exploitables.

Ces informations d'usage peuvent servir à des équipes marketing afin de mieux comprendre l'usage qui est fait des applications informatiques téléchargées sur de nombreux terminaux : sites Internet consultés, types d'achats effectués, types de musiques écoutées, etc.

À titre d'exemple, en connaissant l'activité des utilisateurs, un service marketing pourra cibler les publicités qui vont être envoyées sur leur terminal informatique : pour un premier utilisateur, on enverra de la publicité relative au sport alors que pour un autre utilisateur, on enverra de la publicité relative à la musique, etc.

Toute modification de ce qui doit être audité réclame de modifier tout ou partie de l'application informatique. Les développeurs doivent donc analyser finement ce qui doit être collecté, puis écrire les instructions d'audit aux bons endroits.

Par exemple, si un utilisateur visite un site Internet consacré au sport durant une heure puis qu'il visite un site Internet consacré à la musique durant cinq secondes, et si des instructions spécifiques ne sont pas prévues, le service marketing ne disposera d'aucune information concrète lui permettant de constater que l'utilisateur préfère le sport à la musique et qu'il n'est peut-être pas utile de lui envoyer de la publicité relative à de la musique.

De tels mécanismes prévoient l'intégration de ces applications sur un terminal de type ordinateur standard, car la puissance de calculs d'un ordinateur standard permet des traitements efficaces, en utilisant la puissance du processeur, mais aussi grâce à la rapidité et à l'espace disponible sur les unités de stockage, ainsi qu'à la vélocité croissante des réseaux qui permet d'envisager d'envoyer des données via ces mêmes réseaux.

Cependant, un problème générale se pose quant à la mise en oeuvre d'un procédé d'audit de données dans un terminal ayant des ressources matérielles peu performantes tel qu'un terminal mobile, car les contraintes sont plus nombreuses et donc l'audit des informations relatives aux données d'usage de l'application devient beaucoup plus complexe.

En effet, il existe plusieurs problèmes auxquels est confronté le concepteur d'une application informatique qui souhaite savoir quel est l'usage que les utilisateurs vont en faire.

Un de ces problèmes est relatif aux contraintes de puissance du processeur. En effet, une application qui contient trop d'instructions relatives à l'analyse de l'usage va vite avoir des problèmes de performance. De plus, une information trop riche va vite poser des problèmes de stockage et/ou d'envoi sur un serveur centralisé.

Enfin, une modification des informations d'audit oblige une mise à jour de l'application informatique, ce qui est extrêmement pénalisant sur un terminal mobile à cause de la lenteur du réseau et de la difficulté inhérente à cette manipulation pour des personnes non spécialistes.

Il existe ensuite des contraintes d'espace de stockage. Une application qui fonctionne sur un terminal mobile ne dispose pas toujours de beaucoup d'espace de stockage pour stocker les traces de l'usage qui en est fait.

Il existe également des contraintes de rapidité du réseau. L'analyse des données d'usage ne se fera pas sur le terminal mobile lui-même, mais plutôt de façon centralisée.

La seule méthode pour rapatrier ces données d'usage sur un serveur centralisé consiste à envoyer ces mêmes données via le réseau. Or le réseau mobile est lent et susceptible d'être coupé à tout moment.

Il existe enfin des contraintes liées à la spécificité de certains terminaux mobiles. Une application informatique développée sur un terminal mobile ne fonctionnera pas nécessairement sur un autre terminal mobile.
Il en est de même pour tous les développements sur plateformes mobiles qui utilisent différents OS et différentes implémentations de Java (ou autre : C++, Brew, Symbian, Linux, Android, iPhone, ...), associées à des restrictions de sécurité imposées par les constructeurs ou les opérateurs. Le développement doit donc être testé et éventuellement retravaillé si on souhaite le faire fonctionner sur un autre terminal.

Des techniques plus simples permettent de récupérer des données d'usage d'applications informatiques, qui sont décrites notamment dans les documents FR 2.868.177, ou encore US 2005/0243854 relatif à une méthode pour analyser les données d'un téléphone mobile décrite dans le document.

On connaît plus particulièrement par le document US 2007/0038974 une méthode dans laquelle un ensemble de fonctions utilisent les composants d'un cadriciel, ou « framework » en anglais, pour réaliser une application informatique intégrée dans un ordinateur, lesdits composants étant audités de manière à définir l'usage qui en est fait, les résultats de l'audit étant transmis vers un serveur distant pour être analysés.
Cette méthode est mise en oeuvre par l'intermédiaire d'un outil permettant de définir quels sont les composants d'un cadriciel associé à une application informatique intégrée dans un ordinateur qui suffiraient à réaliser la même application sur un téléphone mobile.

On rappelle qu'une application informatique (mails, blog, navigation Internet, ...) intégrée dans un terminal informatique est combinée à un cadriciel spécifique.

Un cadriciel est une notion informatique bien connue de l'homme du métier.

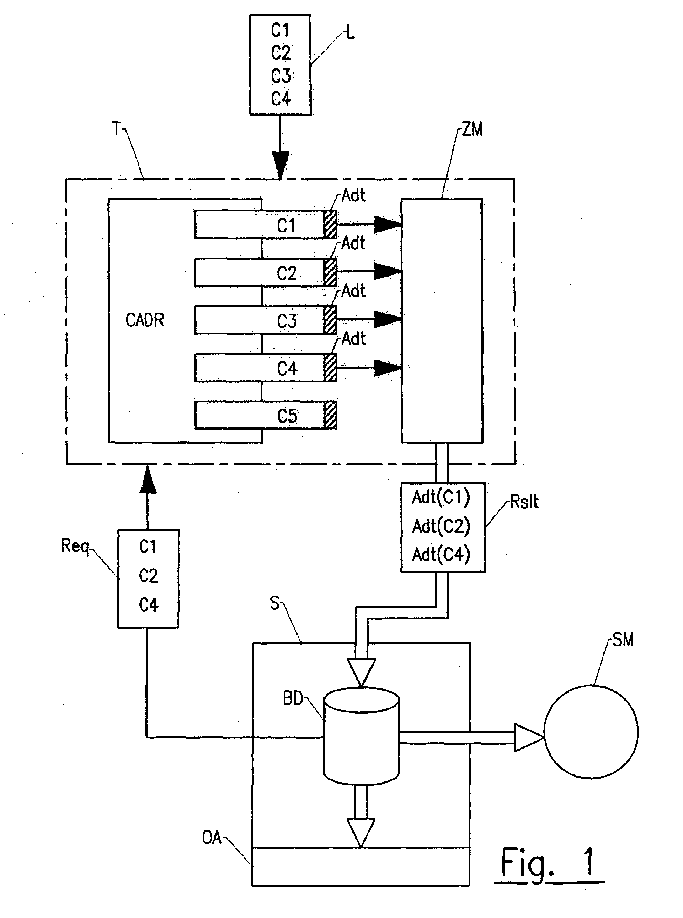

En se rapportant à la figure 1, un cadriciel CADR pourrait s'apparenter à une bibliothèque structurée et organisée de composants C1, C2, C3, C4, C5 prédéfinis par les développeurs. Ces composants C1, C2, C3, C4, C5 peuvent être des éléments graphiques, des objets, des outils informatiques, des programmes, des méthodes, etc. Les composants d'un cadriciel sont structurés et organisés pour être utilisés en interaction les uns avec les autres et pourraient s'apparenter à des « briques logicielles ».

Un cadriciel fournit un environnement où les composants peuvent être réutilisés d'une application informatique à une autre. Il fournit suffisamment de composants et impose suffisamment de rigueur pour pouvoir produire une application informatique aboutie et facile à maintenir.

L'outil décrit dans le document US 2007/0038974 permet d'analyser en détail l'utilisation qui est faite des composants du cadriciel.

Cette technique d'audit basée sur l'analyse des composants d'un cadriciel permet de s'affranchir des problèmes cités précédemment et liés à l'écriture fastidieuse d'instructions au sein même d'une application informatique.
Toutefois, l'un des inconvénients majeur d'une telle solution est de ne pas être adaptée à un audit d'informations réalisées par exemple à des fins marketings.

En effet, dans le document US 2007/0038974, tous les composants du cadriciel sont audités alors qu'en pratique, un service marketing n'a besoin de connaître l'usage que de certains d'entre eux. Une telle solution nécessite de disposer d'un ordinateur disposant d'importantes ressources matérielles pour répondre aux contraintes de puissance, d'espace de stockage et de capacité réseau, car la quantité d'informations d'usage à traiter et à transférer vers un serveur distant est beaucoup trop importante.

### EXPOSE DE L'INVENTION

L'invention vise à remédier aux problèmes liés aux difficultés techniques relatives à la consommation importante de ressources matérielles lors de l'audition de données d'usage d'une application s'exécutant dans un terminal

L'invention propose d'améliorer la portabilité et de limiter la consommation de ressources de mécanismes d'analyse de données par un traitement sélectif et paramétrable de composants d'un cadriciel.

Plus précisément, l'invention a pour objet un procédé d'audit de données relatives à l'utilisation d'une application informatique exécutée dans un terminal, ladite application étant combinée à un cadriciel composé d'un ensemble de composants, ledit procédé comportant :
- l'exécution de l'application à partir d'un ensemble de fonctions utilisant les composants du cadriciel ;
- l'audition des composants du cadriciel, et
- la transmission des résultats obtenus de ladite étape d'audition à un serveur distant de sorte que ces résultats soient analysés.
   Le procédé comportant en outre les étapes préliminaires suivantes :

- labellisation préalable de chaque composant du cadriciel ;
- transmission au terminal d'une liste de composants du cadriciel devant être audités, et
- intégration d'une instruction d'audit dans au moins un composant du cadriciel.
   Dans ce procédé, ladite étape d'audition comprend une sous-étape d'activation de l'instruction d'audit, ladite instruction d'audit n'étant activée que lorsque le composant du cadriciel, dans lequel ladite instruction est intégrée, est utilisé et compris dans ladite liste de sorte à obtenir lesdits résultats comprenant les labels des composants audités associés à l'utilisation visée.

En établissant une liste des composants à auditer, un service marketing, un service technique, et/ou toute autre entité, a maintenant la possibilité de sélectionner, parmi tous les composants du cadriciel, les seuls composants dont il souhaite connaître l'activité.
Et l'intégration d'une instruction d'audit à l'intérieur même des composants permet de commander très simplement l'audit lorsque les composants sélectionnés sont utilisés, sans qu'il soit nécessaire de modifier l'application informatique.
L'invention utilise donc un cadriciel spécifique qui permet aux développeurs de se concentrer sur la logique de leur application informatique et non plus sur des instructions d'audit.

Selon des modes de réalisation particuliers :
- la liste des composants à auditer est générée dans un serveur distant auquel doit se connecter le terminal informatique pour mettre en oeuvre l'application informatique ;
- la liste des composants à auditer est transmise au terminal informatique lors du téléchargement initial de l'application informatique ;
- lors du téléchargement initial de l'application informatique, la liste des composants à auditer est vide ou comporte des composants inscrits par défaut ;
- la liste des composants à auditer est transmise au terminal informatique après que ce dernier s'est connecté au serveur distant permettant de mettre en oeuvre l'application informatique ;
- la liste des composants à auditer est générée dans le serveur distant vers lequel les résultats de l'audit sont transférés ;
- la liste des composants à auditer contient des instructions d'audit associées à chacun desdits composants ;
- la liste des composants à auditer est mise à jour dans un serveur distant et transmise au terminal informatique après chaque mise à jour ;
- les résultats de l'audit sont préalablement stockés dans une zone mémoire et/ou un fichier du terminal informatique avant d'être transmis au serveur distant ;
- le transfert des résultats de l'audit, depuis la zone mémoire et/ou le fichier du terminal informatique vers le serveur distant, est commandé par une requête émise depuis ledit serveur ;
- la requête émise par le serveur contient une liste restreinte de composants du cadriciel pour lesquels les résultats doivent être transmis ;
- le transfert des résultats de l'audit, depuis la zone mémoire et/ou le fichier du terminal informatique vers le serveur distant, est commandé dès que la capacité de stockage de ladite zone mémoire et/ou dudit fichier atteint un seuil critique ;
- le transfert des résultats de l'audit, depuis la zone mémoire et/ou le fichier du terminal informatique vers le serveur distant, est commandé à chaque connexion dudit terminal audit serveur, et
- le transfert des résultats de l'audit, depuis la zone mémoire et/ou le fichier du terminal informatique vers le serveur distant, est commandé à un instant donné défini par une horloge intégrée dans ledit terminal.

### BREVE DESCRIPTION DES FIGURES

D'autres caractéristiques et avantages de l'invention ressortiront à la lecture de la description qui suit, en référence aux figures annexées, qui illustrent :
- la figure 1, illustre de façon schématique les principales étapes d'un mode de réalisation de l'invention,
- la figure 2, représente un organigramme des principales étapes d'un mode de réalisation selon l'invention.

Pour plus de clarté, les éléments identiques ou similaires sont repérés par des signes de référence identiques sur l'ensemble des figures.

### DESCRIPTION DETAILLEE D'UN MODE DE REALISATION

Le procédé objet de l'invention permet d'auditer des informations relatives à l'usage d'une application informatique intégrée dans un terminal informatique. De manière non limitative, cet audit est préférentiellement destiné à des services marketing souhaitant analyser l'activité d'utilisateurs de terminaux informatiques en vue de cibler les messages publicitaires qui leur seront envoyés. Cet audit peut également être utilisé par d'autres entités et notamment des services techniques souhaitant analyser des dysfonctionnements qui peuvent se produire lors de la mise en oeuvre d'une application informatique.

Les terminaux informatiques utilisés pour la mise en oeuvre de l'invention peuvent être des terminaux fixes de type ordinateur (PC), ou mobiles tels que des téléphones mobiles, des appareils du type assistant digital personnel (PDA), des appareils du type BlackBerry®, ou des terminaux fixes tels que des ordinateurs PC.

Ces terminaux informatiques intègrent une ou plusieurs applications informatiques. Les applications informatiques à analyser sont typiquement celles habituellement proposées à un utilisateur de terminal informatique : Connexion à Internet, Messagerie Instantanée, Mail, Blog, ou autre.

Il peut également s'agir d'applications informatiques moins courantes et/ou nouvelles (par exemple des mises à jour) et dont les concepteurs souhaitent savoir quel est l'usage que les utilisateurs vont en faire. Conformément à l'invention, et comme représenté sur la figure 1, chaque application informatique intégrée dans un terminal informatique T est combinée à un cadriciel CADR composé d'un ensemble de composants C1, C2, C3, C4, C5 permettant de réaliser ladite application.

Chaque cadriciel peut être associé à une ou plusieurs applications informatiques.

Sur la figure 1, seuls cinq composants sont représentés, mais on doit comprendre qu'un cadriciel en comporte une multitude. Ces composants C1, C2, C3, C4, C5 peuvent être des éléments graphiques, des objets, des outils informatiques, des programmes, des méthodes, des fonctions, etc.

De manière générale, un ensemble de fonctions (ou commandes informatiques) utilisent les composants du cadriciel pour réaliser l'application informatique. Les composants sont donc « appelés » pour mettre en oeuvre l'application.

Par exemple, une fonction permettra d'afficher des onglets sur l'écran d'un terminal informatique et d'afficher sous cet onglet : une zone texte, un menu déroulant, des boutons. Une autre fonction permettra d'écrire un texte dans la zone texte.

Encore une autre fonction permettra de dérouler/enrouler le menu déroulant.

Encore une autre fonction permettra d'activer les boutons.

D'autres fonctions décriront la manière dont des appels au système d'exploitation du terminal informatique doivent être implémentés, ou la manière dont des appels à des librairies doivent se faire, etc.

Conformément à l'invention, chaque composant du cadriciel est reconnu par un identifiant unique. Cette labélisation des composants du cadriciel permet d'analyser finement leur usage.

En effet, si on se contente d'enregistrer les fonctions qui agissent sur les composants sans les identifier, une même fonction qui s'applique à deux composants différents, ne serait pas enregistrée de façon différente. Par exemple, la labélisation des composants permettra d'enregistrer différemment l'affichage d'un onglet et l'affichage d'une zone texte : la fonction « affichage » étant la même, mais s'appliquant à des composants « onglet » et « menu déroulant » différents.

D'autres composants du cadriciel qui ne s'affichent pas mais qui sont intéressants à auditer pourront aussi porter un identifiant. Cette labellisation pourra varier selon l'application informatique utilisant le cadriciel.

Il est particulièrement avantageux de classer et/ou de hiérarchiser les identifiants de composants du cadriciel pour analyser finement leur appel.

On peut par exemple lier les identifiants des éléments graphiques affichés aux identifiants des éléments graphiques englobant les précédents. En effet, les éléments graphiques qui s'affichent sous un premier onglet ne seront peut-être pas les mêmes que ceux qui s'affichent sous un autre onglet.

À titre d'exemple, on pourrait identifier les composants du cadriciel de la façon suivante : C1 ; C1 :C2 ; C1 :C3 ; C3:C4 ; C3:C5, ce qui pourrait indiquer que le composant C1 contient les composants C2 et C3, et que le composant C3 contient les composants C4 et C5. Cette classification des composants du cadriciel permet ainsi d'enregistrer différemment leur appel. Suite à ce classement, on obtient une arborescence d'identifiants, représentant l'architecture du cadriciel et de l'application informatique ainsi réalisée.

On notera qu'un même composant peut avoir un identifiant différent selon l'application informatique dans laquelle il est utilisé.

Le cadriciel est capable de gérer cette hiérarchisation, le développeur n'ayant pas besoin de penser à la mettre en place : il devra simplement donner un nom aux différents composants.

Les composants d'un cadriciel se présentent habituellement sous la forme d'une série de codes exécutables.

Conformément à l'invention, une instruction d'audit (c'est-à-dire une ou plusieurs lignes de codes supplémentaires) est intégrée dans chaque composant du cadriciel ou uniquement dans certains d'entre eux. De cette manière, lorsqu'un composant du cadriciel intégrant une instruction d'audit est appelé par l'application informatique, l'audit dudit composant sera automatiquement activé. Les instructions d'audit permettant d'enregistrer non seulement l'appel du composant (les fonctions appliquées), mais aussi le label du composant donné par le développeur.

Certaines informations supplémentaires peuvent être auditées comme le temps d'affichage d'un composant, l'activation volontaire d'un composant par l'utilisateur, le lieu de stockage des résultats, etc.

De manière générale, les instructions d'audit permettent d'enregistrer l'usage d'un composant du cadriciel, et plus spécifiquement l'usage réel d'un utilisateur qui manipule une interface graphique. Une fois l'application informatique lancée et l'audit réalisé, une série d'informations sera disponible, par exemple sous forme de liste.

Le tableau 1 ci-dessous illustre un exemple de résultat d'audit.

**Tableau 1**

| Composant audité | Résultat d'audit |
|---|---|
| C1 (ex : onglet) | Temps d'affichage = 5s, 2s, 7s |
| C1:C2 (ex : zone texte) | Inscription = Oui |
| C1:C2 (ex : menu déroulant) | Déroulement = Non |
| C3:C4 (ex : 1^{er} bouton) | Nombre d'activation = 0 |
| C3:C5 (ex : 2^{nd} bouton) | Nombre d'activation = 5 |

En pratique, les développeurs précisent dans les codes des composants du cadriciel la façon dont les résultats d'audit vont être gérés. Ils compilent l'application informatique avec le cadriciel ainsi généré de manière à créer une application exécutable.

Il serait également possible de proposer une application informatique compilée à part qui utilise un cadriciel compilé à part lui aussi.

Les instructions d'audit peuvent être activées de façon centralisée par des paramètres qui peuvent être changés sans recompiler l'application informatique ni le cadriciel.

Un fichier présent sur le terminal informatique peut par exemple être lu pour récupérer ces instructions d'audit. Un appel sur une URL peut aussi retourner les instructions nécessaires. Une fonction spéciale (fonction d'initialisation des audits) peut-être appelée par l'application informatique pour que le cadriciel récupère ces instructions d'audit.

Lors de l'exécution de l'application informatique, les composants du cadriciel sont appelés. L'application informatique déclenche alors l'appel à la fonction d'initialisation des audits. Le cadriciel déclenche cette initialisation par lecture d'un fichier ou d'un appel réseau suivant les paramètres par défaut. Pour cela, le terminal informatique appelle un serveur distant (serveur Web, serveur de messagerie instantanée, serveur mail, serveur blog, ...) en lui transmettant une requête de connexion comprenant une identification de l'application informatique à mettre en oeuvre ainsi que l'identification de l'utilisateur.

Le serveur distant qui recevra cette requête de connexion va reconnaître l'application informatique qui lui demande ces paramètres d'audit.

Le serveur distant possède en effet une base de données qui contient les références des applications informatiques qui sont susceptibles de faire l'objet d'audits.

Le serveur possède également les instructions d'audit à retourner pour une application informatique donnée.

Le serveur pourra aussi retourner des instructions d'audit spécifique pour une application informatique associée à un utilisateur particulier. Le serveur va lire ces instructions d'audit dans sa base de données, et va les transmettre au terminal informatique en réponse à la requête de connexion. Le terminal informatique récupère ces instructions d'audit pour les intégrer aux composants du cadriciel.

En se rapportant à l'exemple de la figure 1, tous les composants C1, C2, C3, C4, C5 du cadriciel CADR (ou certains d'entre eux) intègrent une instruction d'audit Adt. Lorsque l'application informatique est lancée et qu'un composant à auditer est appelé par ladite application (i.e. une fonction utilise le composant pour réaliser l'application), alors l'audit du composant est réalisé.

Conformément à l'invention, une liste L des composants à auditer est transmise au terminal informatique T avant le lancement de l'application informatique. La liste L, outre le nom des composants à auditer, peut contenir les instructions d'audits associées à chacun desdits composants.

Cette liste est émise depuis un serveur distant. En pratique, la liste L se présente dans un format invisible pour l'utilisateur (par exemple sous la forme d'un SMS, de codes ou de morceaux de codes) et est émise selon un protocole classique.

En poursuivant l'exemple illustrant l'invention, la liste L contient les composants suivants : C1, C2, C3 et C4.

Cette liste L permet d'activer l'instruction d'audit que si le composant du cadriciel dans laquelle ladite instruction est intégrée est utilisé et appartient à ladite liste.

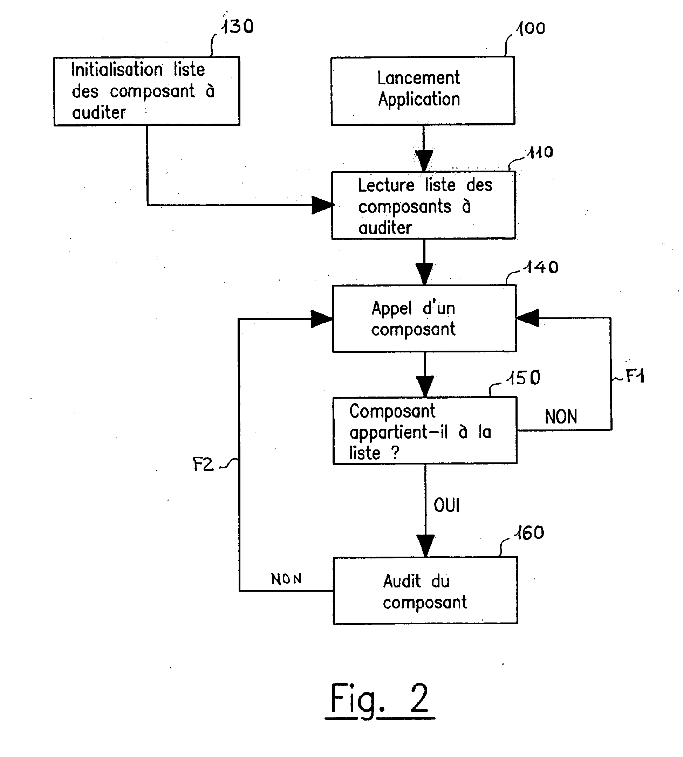

Comme illustré à la figure 2, lorsque l'application informatique est lancée (étape 100), les différents composants vont être appelés et lus (étape 110), c'est-à-dire que des fonctions vont agir dessus, à partir de la liste des composants (étape 130). À chaque appel d'un composant C1, C2, C3 ou C4 (étape 140) appartenant à la liste L (vérification à l'étape 150), l'instruction d'audit Adt associée sera en principe activée (étape 160) et le cadriciel enregistrera l'usage qui en est fait. Si le composant n'appartient pas à la liste L (flèche F1) ou si l'audit du composant n'est pas instruit (flèche F2), l'application retourne à l'étape d'appel (étape 140).

Selon les instructions d'audit, le cadriciel pourra garder en mémoire les résultats d'audits en les stockant localement dans une zone mémoire ZM et/ou dans un fichier du terminal T et/ou il pourra déclencher un appel vers un serveur distant pour les envoyer vers celui-ci.

Les autres composants appelés par l'application informatique, mais qui ne font pas partie de la liste L ne seront pas audités. En établissant une liste des composants du cadriciel devant être audités, un service marketing (et/ou toute autre entité) a maintenant la possibilité de sélectionner, parmi tous les composants du cadriciel, les seuls composants dont il souhaite connaître l'activité.

La liste L des composants du cadriciel devant être audités est avantageusement générée dans un serveur distant qui peut être soit le serveur S vers lequel sont transférés les résultats d'audit soit un serveur auquel doit se connecter le terminal pour mettre en oeuvre l'application informatique (serveur Web, serveur de messagerie instantanée, serveur mail, serveur blog, ...).

Avantageusement, la liste L des composants du cadriciel devant être audités est mise à jour dans ce serveur distant et transmise au terminal informatique T après chaque mise à jour. La liste L peut être transmise au terminal informatique T après que ce dernier s'est connecté à un serveur distant permettant de mettre en oeuvre l'application informatique. Typiquement, pour lancer l'application informatique, le terminal T envoie préalablement au serveur une requête de connexion. Cette dernière est associée à un identifiant de l'utilisateur du terminal T.

Après avoir vérifié cet identifiant, le serveur transmet au terminal T la liste L des composants à auditer. Dans une variante de réalisation, la liste L pourrait être transmise au terminal T lors du téléchargement initial de l'application informatique. Dans ce dernier cas, la liste L pourra être vide (et être complétée lors des mises à jour ultérieures) ou comporter des composants inscrits par défaut.

À tout moment, le serveur distant chargé de récupérer les résultats d'audit pourra envoyer une commande vers le terminal informatique pour qu'il rappelle la commande d'initialisation des audits (étape 120). Les résultats d'audit Rslt, comprenant les labels des composants du cadriciel associés à l'utilisation qui en est faite, sont stockés dans une zone mémoire ZM et/ou un fichier du terminal informatique T ou envoyés directement vers un serveur S distant pour être analysés en temps réel ou à postériori.

Une solution mixte peut aussi être envisagée pour gérer les instabilités du réseau ou répondre à un problème d'espace de stockage.

Le transfert des résultats d'audit Rslt, depuis le terminal T jusqu'au serveur S, est réalisé dans un format standard, selon un protocole classique.

Ce dernier peut comporter une base de données BD dans laquelle sont stockés tous les résultats d'audit, ladite base étant accessible à un service marketing SM ou à toute autre entité qui se chargera de l'analyse.

Le serveur S peut également être directement équipé d'un outil d'analyse OA. Une fois rapatriés à l'endroit souhaité, les résultats d'audit pourront être traités par un logiciel de statistiques ou de CRM.

Dans le cas où les résultats de l'audit Rslt sont préalablement stockés dans une zone mémoire ZM et/ou dans un fichier du terminal informatique T, le transfert desdits résultats vers le serveur S, peut être commandé par une requête Req émise depuis ledit serveur.

Cette requête Req est émise dans un format standard et sous un protocole standard. La requête Req pourra contenir une liste restreinte de composants du cadriciel pour lesquels les résultats doivent être transmis.

Par exemple, si les composants C1, C2, C3, C4 et C5 ont 25 été audités, seuls les résultats relatifs aux composants C1, C2 et C4 pourront être transmis au serveur S.

Concrètement, ceci permet par exemple d'auditer tous les éléments graphiques qui apparaissent sur l'écran du terminal T, mais de transférer uniquement les résultats de certains de ces éléments graphiques qui sont nécessaires à un instant donné a un service marketing.

Ceci a pour effet immédiat de limiter la quantité de données qui doit être stockée ou transférée, tout en laissant la possibilité de les activer à tout moment par une autre requête.

Cette dernière pourra être envoyée via un appel sur le réseau, ou en lisant de façon régulière un fichier qui est susceptible d'être modifié par un autre processus et donc de contenir des ordres d'enregistrement des résultats d'audit.

Dans une variante de réalisation, le transfert des résultats d'audit Rslt, depuis la zone mémoire ZM et/ou le fichier du terminal informatique T vers le serveur S, est commandé dès que la capacité de stockage de ladite zone mémoire et/ou dudit fichier atteint un seuil critique, par exemple tous les X résultats collectés ou tous les Y Octets stockés.

L'invention n'est pas limitée aux exemples de réalisation décrit et illustrés. Elle n'est en outre pas limitée à ces exemples d'exécution et aux variantes décrites.
En effet, le transfert des résultats d'audit Rslt peut également être commandé chaque fois que le terminal T se connecte au serveur S. Le transfert des résultats d'audit Rslt peut encore être commandé à un instant donné, défini par une horloge intégrée dans le terminal T, par exemple toutes les X minutes ou secondes.

## Revendications

1. Procédé d'audit de données relatives à l'usage d'une application informatique exécutée dans un terminal (T), ladite application étant combinée à un cadriciel (CADR) composé d'un ensemble de composants (C1, C2, C3, C4, C5), ledit procédé comportant:
- l'exécution de l'application à partir d'un ensemble de fonctions utilisant les composants du cadriciel ;
- l'audition des composants du cadriciel, et
- la transmission des résultats (Rslt) obtenus de ladite étape d'audition à un serveur (S) distant de sorte que ces résultats soient analysés,
**caractérisé en ce qu'**il comporte les étapes préliminaires suivantes :
- labellisation préalable de chaque composant du cadriciel ;
- transmission au terminal d'une liste (L) de composants du cadriciel devant être audités, et
- intégration d'une instruction d'audit dans au moins un composant du cadriciel,
et **en ce que** ladite étape d'audition comprend une sous-étape d'activation de l'instruction d'audit (Adt), ladite instruction d'audit n'étant activée que lorsque le composant du cadriciel, dans lequel ladite instruction est intégrée, est utilisé et compris dans ladite liste de sorte à obtenir lesdits résultats comprenant les labels des composants audités associés à l'utilisation qui en est faite.

2. Procédé selon la revendication 1, dans lequel la liste (L) des composants (C1, C2, C3, C4, C5) à auditer est générée dans le serveur distant auquel doit se connecter le terminal informatique (T) pour mettre en oeuvre l'application informatique.

3. Procédé selon la revendication 2, dans lequel la liste (L) des composants (C1, C2, C3, C4, C5) à auditer est transmise au terminal informatique (T) lors du téléchargement initial de l'application informatique.

4. Procédé selon la revendication 3, dans lequel lors du téléchargement initial de l'application informatique, la liste (L) des composants (C1, C2, C3, C4, C5) à auditer est vide ou comporte des composants inscrits par défaut.

5. Procédé selon la revendication 2, dans lequel la liste (L) des composants (C1, C2, C3, C4, C5) à auditer est transmise au terminal informatique (T) après que ce dernier s'est connecté au serveur distant permettant de mettre en oeuvre l'application informatique.

6. Procédé selon la revendication 1, dans lequel la liste (L) des composants (C1, C2, C3, C4, C5) à auditer est générée dans le serveur (S) distant vers lequel les résultats (Rslt) de l'audit sont transférés.

7. Procédé selon la revendication 6, dans lequel la liste (L) des composants (C1, C2, C3, C4, C5) à auditer contient également des instructions d'audit associées à chacun desdits composants.

8. Procédé selon l'une des revendications précédentes, dans lequel la liste (L) des composants (C1, C2, C3, C4, C5) à auditer est mise à jour dans le serveur distant et transmise au terminal informatique après chaque mise à jour.

9. Procédé selon l'une des revendications précédentes, dans lequel avant d'être transmis au serveur (S) distant, les résultats (Rslt) de l'audit sont préalablement stockés dans une zone mémoire (ZM) et/ou un fichier du terminal informatique (T).

10. Procédé selon la revendication 9, dans lequel le transfert des résultats (Rslt) de l'audit, depuis la zone mémoire (ZM) et/ou le fichier du terminal informatique (T) vers le serveur (S) distant, est commandé par une requête (Req) émise depuis ledit serveur.

11. Procédé selon la revendication 10, dans lequel la requête (Req) émise par le serveur (S) contient une liste restreinte de composants (C1, C2, C3, C4, C5) du cadriciel pour lesquels les résultats doivent être transmis.

12. Procédé selon la revendication 9, dans lequel le transfert des résultats (Rslt) de l'audit, depuis la zone mémoire (ZM) et/ou le fichier du terminal informatique (T) vers le serveur (S) distant, est commandé dès que la capacité de stockage de ladite zone mémoire et/ou dudit fichier atteint un seuil critique.

13. Procédé selon la revendication 9, dans lequel le transfert des résultats (Rslt) de l'audit, depuis la zone mémoire (ZM) et/ou le fichier du terminal informatique (T) vers le serveur (S) distant, est commandé à chaque connexion dudit terminal audit serveur.

14. Procédé selon la revendication 9, dans lequel le transfert des résultats (Rslt) de l'audit, depuis la zone mémoire(ZM) et/ou le fichier du terminal informatique (T) vers le serveur (S) distant, est commandé à un instant donné défini par une horloge intégrée dans ledit terminal.
